(19) Europäisches Patentamt / European Patent Office / Office européen des brevets

(11) **EP 3 505 663 A1**

(12) **EUROPEAN PATENT APPLICATION**
published in accordance with Art. 153(4) EPC

(43) Date of publication:
03.07.2019 Bulletin 2019/27

(51) Int Cl.:
*D02G 3/48* *(2006.01)*  *B60C 9/00* *(2006.01)*
*B60C 9/08* *(2006.01)*  *B60C 9/22* *(2006.01)*
*D02G 3/26* *(2006.01)*  *B60C 9/04* *(2006.01)*

(21) Application number: 17843530.1

(22) Date of filing: 21.08.2017

(86) International application number:
PCT/JP2017/029774

(87) International publication number:
WO 2018/038050 (01.03.2018 Gazette 2018/09)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 23.08.2016 JP 2016162971

(71) Applicant: Bridgestone Corporation
Tokyo 104-8340 (JP)

(72) Inventor: SASAKI Yosuke
Tokyo 104-8340 (JP)

(74) Representative: Oxley, Robin John George
Marks & Clerk LLP
15 Fetter Lane
London EC4A 1BW (GB)

(54) **PNEUMATIC TIRE AND METHOD FOR PRODUCING SAME**

(57)    Provided are a pneumatic tire with improved dimensional stability, low loss property, and durability and a method of producing the same. In a pneumatic tire, a rubber-fiber composite is used in at least any of a carcass ply and a cap ply, the rubber-fiber composite containing: a fiber cord made of polyamide multifilament fibers having a glass transition temperature in a range of 150°C to 200°C; and a rubber, a layer made of a resorcin-formalin-latex adhesive is formed at an interface between the fiber cord and the rubber, and a thermal contraction stress at 177°C of the fiber cord with the layer formed thereon is 0.01 cN/dtex to 0.2 cN/dtex.

*FIG. 1*

EP 3 505 663 A1

**Description**

TECHNICAL FIELD

The present disclosure relates to a pneumatic tire and a method of producing the same.

BACKGROUND

Conventionally, PET fibers and nylon fibers have been used as cords in cap plies of tires. However, PET fibers have low adhesiveness to rubber with conventional adhesives, and accordingly improved adhesives need to be used separately. This causes lower productivity and profitability. Besides, there is still room for improvement in tire durability at high temperature. Nylon fibers adhere to rubber well and also have excellent fatigue resistance, but cause poor steering stability due to low elastic modulus at high temperature and poor tire dimensional stability due to high thermal contraction stress. PET fibers or rayon fibers have been used as cords in carcass plies. However, PET fibers have the foregoing problems. Rayon fibers need to be further improved in fatigue resistance and durability, and also chemical agents used in spinning are not environmentally desirable (for example, see WO2006078013A1 (PTL 1)).

To solve such problems, hybrid cords obtained by twisting together aromatic polyamide fibers of high rigidity and nylon fibers of low rigidity may be used in cap plies or carcass plies (band layers) of tires.

In the case where hybrid cords of aromatic polyamide fibers and nylon fibers are used, however, sufficient low loss property (low energy loss) and elongation cannot be obtained. Increased heat buildup caused by a loss increase leads to shorter tire life, and high material costs and production costs are required. The development of pneumatic tires with excellent dimensional stability, low loss property (low heat generating property), and durability has thus been needed.

CITATION LIST

Patent Literature

PTL 1: WO2006078013A1

SUMMARY

(Technical Problem)

An object of the present disclosure is therefore to provide a pneumatic tire with improved dimensional stability, low loss property, and durability, and a method of producing the same.

(Solution to Problem)

A pneumatic tire according to the present disclosure is a pneumatic tire wherein a rubber-fiber composite is used in at least any of a carcass ply and a cap ply, the rubber-fiber composite containing: a fiber cord made of polyamide multifilament fibers having a glass transition temperature in a range of 150°C to 200°C; and a rubber, wherein a layer made of a resorcin-formalin-latex adhesive is formed at an interface between the fiber cord and the rubber, and a thermal contraction stress at 177°C of the fiber cord with the layer formed thereon is 0.01 cN/dtex to 0.2 cN/dtex.

A method according to the present disclosure for producing a pneumatic tire is a method of producing the pneumatic tire according to the present disclosure, the method including: attaching a resorcin-formalin-latex adhesive to a fiber cord made of polyamide multifilament fibers; and heating the fiber cord to which the resorcin-formalin-latex adhesive is attached, at 100°C to 250°C, wherein a drawing rate of the fiber cord in the heating is 0.1% to 3%.

(Advantageous Effect)

It is thus possible to provide a pneumatic tire with improved dimensional stability, low loss property, and durability, and a method of producing the same.

BRIEF DESCRIPTION OF THE DRAWINGS

In the accompanying drawings:

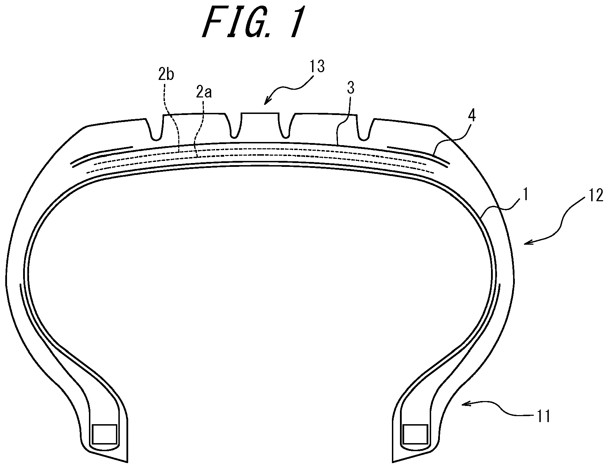

FIG. 1 is a tire width direction cross-sectional view illustrating a pneumatic tire according to an embodiment of the present disclosure.

DETAILED DESCRIPTION

An embodiment will be described in detail below.
The term "fiber cord with the layer formed thereon" as used herein is a fiber cord with a resorcin-formalin-latex adhesive (hereafter also referred to as an "adhesive-attached fiber cord").

(Pneumatic Tire)

A pneumatic tire according to the present disclosure will be described in detail below, by way of an embodiment.
In the pneumatic tire according to the present disclosure, a specific rubber-fiber composite is used in at least any of a carcass ply and a cap ply.
FIG. 1 is a tire width direction cross-sectional view illustrating a pneumatic tire according to one of the disclosed embodiments. As illustrated in the drawing, the pneumatic tire according to this embodiment includes a pair of beads 11, sidewalls 12 extending in the tire radial outward direction from the beads 11, and a tread 13 bridging both the sidewalls 12, and includes, as a framework, a carcass ply 1 extending toroidally between the pair of beads 11. Two belt layers 2a and 2b and cap plies 3 and 4 are arranged sequentially on the tire radial outer side of the crown of the carcass ply 1. Herein, "cap ply" denotes a "part whose cord angle with respect to the tire circumferential direction is less than 5° and that is located on the tire radial outer side of the main belt (intersecting belt)", and encompasses "cap" and "layer".
The pneumatic tire can be produced by a well-known method, and is a tire effectively reinforced by providing the carcass ply 1 and/or the cap plies 3 and 4 including the rubber-fiber composite on the inner side of the tread 13.

<Rubber-Fiber Composite>

The rubber-fiber composite contains at least: fiber cords made of polyamide multifilament fibers; a rubber; and a layer made of a resorcin-formalin-latex adhesive.
The loss tangent (tanδ) at 60°C of the rubber-fiber composite is not limited and may be selected as appropriate depending on the purpose. The loss tangent (tanδ) is preferably 0.01 or more and 0.07 or less, and more preferably 0.01 or more and 0.05 or less. Herein, the loss tangent (tanδ) can be determined by dynamic viscoelasticity measurement.
When the loss tangent (tanδ) is 0.07 or less, the low loss property of the cords can be improved, and also heat buildup can be suppressed, so that tire durability can be improved.
When the loss tangent (tanδ) is 0.05 or less, the low loss property and the tire durability can be further improved.
The storage modulus at 60°C of the rubber-fiber composite is not limited and may be selected as appropriate depending on the purpose. The storage modulus is preferably $2.5 \times 10^8$ Pa to $5.0 \times 10^8$ Pa, and more preferably $3.0 \times 10^8$ Pa to $5.0 \times 10^8$ Pa.
When the storage modulus is $2.5 \times 10^8$ Pa or more, steering stability can be improved.
When the storage modulus is $3.0 \times 10^8$ Pa or more, steering stability can be further improved.

<<Fiber Cords>>

The fiber cords are obtained by twisting polyamide multifilament fibers, and can be used as a tire cords. By twisting the polyamide multifilament fibers, the tenacity utilization rate is averaged, and the fatigue resistance is improved.
The form and the twisting method for the fiber cords are not limited, and may be selected as appropriate depending on the purpose.
The tension of the fiber cord upon twisting is not limited, and may be selected as appropriate depending on the purpose. The tension is preferably 0.01 cN/dtex to 0.2 cN/dtex.
Preferred tire cords are those twisted and arranged into a cord fabric used in a tire. Such a cord fabric can be obtained by arranging 1,500 to 3,000 cord warps made of polyamide multifilament fibers subjected to first and second twists, and weaving the warps with wefts so as not to unravel the warps.
The cord fabric is not limited and may be selected as appropriate depending on the purpose. For example, the cord fabric preferably has a width of 140 cm to 160 cm, a length of 800 m to 2,500 m, and a weft interval of 2.0 to 5.0/5cm.
The wefts used in the weaving are not limited, and may be selected as appropriate depending on the purpose. Preferable examples of the wefts include spun yarns of cotton, rayon, and the like, and spun twisted yarns of synthetic fiber yarns and cotton.
The total fineness D of the fiber cords is not limited, and may be selected as appropriate depending on the purpose. The total fineness D of the fiber cords is preferably 1,880 dtex or more and 4,200 dtex or less. Herein, the total fineness D of the fiber cords is the same as the total fineness D of the below-described fiber cords with the layer formed thereon.

When the total fineness D is 1,880 dtex or more, sufficient tenacity is obtained. When the total fineness D is 4,200 dtex or less, favorable spinnability and post-processing performance are obtained.

As the total fineness D of fiber cords, the value before dipping the fiber cords is used. The total fineness D of dipped fiber cords is also defined as being the value before dipping.

The twist count per 1 m of the fiber cords is not limited, and may be selected as appropriate depending on the purpose. The twist count is preferably 250 or more and 500 or less. Herein, the twist count per 1 m of the fiber cord is the same as the twist count Y per 1 m of the below-described fiber cords with the layer formed thereon.

When the twist count is 250 or more, the fatigue durability of the cord can be improved sufficiently, and thermal contraction stress and tan$\delta$ can be reduced. When the twist count is 500 or less, the elastic modulus of the cord is sufficient.

- Polyamide Multifilament Fibers -

The polyamide multifilament fibers are not limited, and may be selected as appropriate depending on the purpose. Examples include polyamide multifilament fibers made of a polycondensate of a dicarboxylic acid containing an alicyclic dicarboxylic acid and a diamine.

The ratio of the alicyclic dicarboxylic acid to the dicarboxylic acid is not limited, and may be selected as appropriate depending on the purpose. The ratio is preferably 50 mol% or more, more preferably 60 mol% or more, further preferably 70 mol% or more, particularly preferably 80 mol% or more, and most preferably 100 mol%. When the ratio is in this range, the glass transition temperature (Tg) of the polyamide multifilament fibers can be increased (i.e. higher Tg), so that a decrease in rigidity at high temperature, which is a drawback of nylon 66 fibers, can be suppressed considerably. Moreover, since an aliphatic polyamide has an amide bond, rubber adhesiveness is excellent. Further, the molecular weight can be increased while maintaining favorable fluidity as compared with a polyamide including a typical aromatic series-derived structural unit as a heat-resistant polyamide. Hence, yarns having excellent fiber strength can be yielded.

Herein, "polyamide" denotes a polymer having an amide (-NHCO-) bond in the main chain.

The added amounts of the dicarboxylic acid and diamine are not limited, and may be selected as appropriate depending on the purpose. In terms of increasing the molecular weight, nearly equimolar amounts are preferably added.

The molar amount of the total diamine with respect to 1.00 of the molar amount of the total dicarboxylic acid is not limited, and may be selected as appropriate depending on the purpose. The molar amount is preferably 0.90 to 1.20, more preferably 0.95 to 1.10, and particularly preferably 0.98 to 1.05.

The following will describe (i) dicarboxylic acid, (ii) diamine, (iii) end-capping agent, (iv) copper compound, (v) stabilizer, and (vi) lactam and/or aminocarboxylic acid as an example of the components of the polyamide multifilament fibers.

-- (i) Dicarboxylic Acid --

The dicarboxylic acid is not limited as long as it contains an alicyclic dicarboxylic acid, and may be selected as appropriate depending on the purpose.

--- Alicyclic Dicarboxylic Acid ---

The number of carbon atoms of the alicyclic structure in the alicyclic dicarboxylic acid is not limited, and may be selected as appropriate depending on the purpose. The number of carbon atoms is preferably 3 to 10, and more preferably 5 to 10.

The alicyclic dicarboxylic acid is not limited, and may be selected as appropriate depending on the purpose. Examples include 1,4-cyclohexanedicarboxylic acid, 1,3-cyclohexanedicarboxylic acid, and 1,3-cyclopentanedicarboxylic acid. These may be used singly or in combination of two or more.

Of these, 1,4-cyclohexanedicarboxylic acid is preferable in terms of the heat resistance, dimensional stability, and strength of the polyamide multifilament fibers.

The alicyclic dicarboxylic acid may or may not have a substituent.

The substituent is not limited, and may be selected as appropriate depending on the purpose. Examples include alkyl groups having 1 to 4 carbon atoms, such as methyl group, ethyl group, n-propyl group, isopropyl group, n-butyl group, isobutyl group and tert-butyl group. These may be used singly or in combination of two or more.

--- Dicarboxylic Acid Other Than Alicyclic Dicarboxylic Acid ---

As long as the ratio of the alicyclic dicarboxylic acid to the dicarboxylic acid is 50 mol% or more, any dicarboxylic acid other than the alicyclic dicarboxylic acid may be contained unless the desired effects are impaired.

The dicarboxylic acid other than the alicyclic dicarboxylic acid is not limited, and may be selected as appropriate depending on the purpose. Examples include linear or branched aliphatic dicarboxylic acids having 3 to 20 carbon atoms, such as malonic acid, dimethylmalonic acid, succinic acid, 2,2-dimethylsuccinic acid, 2,3-dimethylglutaric acid, 2,2-diethylsuccinic acid, 2,3-diethylglutaric acid, glutaric acid, 2,2-dimethylglutaric acid, adipic acid, 2-methyladipic acid, trimethyladipic acid, pimelic acid, suberic acid, azelaic acid, sebacic acid, dodecanedioic acid, tetradecanedioic acid, hexadecanedioic acid, octadecanedioic acid, eicosanedioic acid, and diglycolic acid. These may be used singly or in combination of two or more.

Any aromatic dicarboxylic acid may be added to the dicarboxylic acid, at a ratio of 0 mol% or more and 10 mol% or less to the dicarboxylic acid.

The aromatic dicarboxylic acid is not limited, and may be selected as appropriate depending on the purpose. Examples include aromatic dicarboxylic acids having 8 to 20 carbon atoms that are unsubstituted or substituted with various substituents, such as terephthalic acid, isophthalic acid, naphthalenedicarboxylic acid, 2-chloroterephthalic acid, 2-methylterephthalic acid, 5-methylisophthalic acid, and 5-sodium sulfoisophthalate. These may be used singly or in combination of two or more.

-- (ii) Diamine

The diamine is not limited, and may be selected as appropriate depending on the purpose. Examples include 1,10-decamethylenediamine.

The ratio of 1,10-decamethylenediamine to the diamine is not limited, and may be selected as appropriate depending on the purpose. In terms of spinning stability, heat resistance, and low absorbency, the ratio is preferably 20 mol% or more, more preferably 30 mol% or more and 80 mol% or less, further preferably 40 mol% or more and 75 mol% or less, and particularly preferably 45 mol% or more and 70 mol% or less.

Diamines other than 1,10-decamethylenediamine are not limited, and may be selected as appropriate depending on the purpose. Examples include: unsubstituted linear aliphatic diamines such as ethylenediamine, propylenediamine, tetramethylenediamine, pentamethylenediamine, hexamethylenediamine, heptamethylenediamine, octamethylenediamine, nonamethylenediamine, decamethylenediamine, undecamethylenediamine, dodecamethylenediamine, and tridecamethylenediamine; branched aliphatic diamines having a substituent such as 2-methylpentamethylenediamine, 2,2,4-trimethylhexamethyenediamine, 2-methyloctamethylenediamine, and 2,4-dimethyloctamethylenediamine; and alicyclic diamines such as 1,4-cyclohexanediamine, 1,3-cyclohexanediamine, and 1,3-cyclopentanediamine. These may be used singly or in combination of two or more.

The substituent on the branched aliphatic diamine is not limited, and may be selected as appropriate depending on the purpose. Examples include alkyl groups having 1 to 4 carbon atoms, such as methyl group, ethyl group, n-propyl group, isopropyl group, n-butyl group, isobutyl group, and tert-butyl group.

Any aromatic diamine, which is an aromatic compound-containing diamine, may be added to the diamine, at a ratio of 0 mol% or more and 10 mol% or less to the diamine.

The aromatic diamine is not limited, and may be selected as appropriate depending on the purpose. Examples include metaxylilenediamine, orthoxylilenediamine, and paraxylilenediamine. These may be used singly or in combination of two or more.

Diamines other than 1,10-decamethylenediamine include any diamine having 5 to 6 carbon atoms. Copolymerization of a diamine having 5 to 6 carbon atoms other than 1,10-decamethylenediamine makes it possible to obtain a polymer having high crystallinity while maintaining a suitable melting temperature for spinning.

The diamine having 5 to 6 carbon atoms is not limited, and may be selected as appropriate depending on the purpose. Examples include pentamethylenediamine, hexamethylenediamine, 2-methylpentamethylenediamine, 2,5-dimethylhexanediamine, and 2,2,4-trimethylhexamethylenediamine. These may be used singly or in combination of two or more.

Of these, hexamethylenediamine is preferable in terms of the heat resistance of the polyamide multifilament fibers, and 2-methylpentamethylenediamine is preferable in terms of spinnability, fluidity, and strength.

The ratio of hexamethylenediamine in the diamine is not limited, and may be selected as appropriate depending on the purpose. The ratio is preferably 20 mol% or more and 60 mol% or less, more preferably 20 mol% or more and 50 mol% or less, and further preferably 20 mol% or more and 45 mol% or less.

If the ratio is excessively high, the melting temperature is excessively high, which hampers spinning.

The ratio of 2-methylpentamethylenediamine in the diamine is not limited, and may be selected as appropriate depending on the purpose. The ratio is preferably 20 mol% or more and 70 mol% or less, more preferably 20 mol% or more and 60 mol% or less, and particularly preferably 20 mol% or more and 55 mol% or less.

When the ratio is in the predetermined range, decomposition during melting can be prevented while ensuring fluidity.

If the ratio is excessively high, 2-methylpentamethylenediamine undergoes self-cyclization and decomposes during melting, which causes a decrease in molecular weight. This leads to lower spinnability and strength.

-- (iii) End-Capping Agent --

The end-capping agent is an additive for adjusting the molecular weight during polymerization of a polyamide from the dicarboxylic acid and the diamine.

The end-capping agent is not limited, and may be selected as appropriate depending on the purpose. Examples include monocarboxylic acids, monoamines, acid anhydrides such as phthalic anhydride, monoisocyanates, acid monohalides, monoesters, and monoalcohols. These may be used singly or in combination of two or more.

Of these, monocarboxylic acids and monoamines are preferable in terms of thermal stability.

Monocarboxylic acids usable as the end-capping agent are not limited as long as they have reactivity with amino groups, and may be selected as appropriate depending on the purpose. Examples include: aliphatic monocarboxylic acids such as formic acid, acetic acid, propionic acid, butyric acid, valeric acid, caproic acid, caprylic acid, lauric acid, tridecylic acid; myristic acid, palmitic acid, stearic acid, pivalic acid, and isobutylic acid; alicyclic monocarboxylic acids such as cyclohexanecarboxylic acid; and aromatic monocarboxylic acids such as benzoic acid, toluic acid, $\alpha$-naphthalenecarboxylic acid, $\beta$-naphthalenecarboxylic acid, methylnaphthalenecarboxylic acid, and phenylacetic acid. These may be used singly or in combination of two or more.

Monoamines usable as the end-capping agent are not limited as long as they have reactivity with carboxyl groups, and may be selected as appropriate depending on the purpose. Examples include: aliphatic monoamines such as methylamine, ethylamine, propylamine, butylamine, hexylamine, octylamine, decylamine, stearylamine, dimethylamine, diethylamine, dipropylamine, and dibutylamine; alicyclic monoamines such as cyclohexylamine and dicyclohexylamine; and aromatic monoamines such as aniline, toluidine, diphenylamine, and naphthylamine. These may be used singly or in combination of two or more.

-- (iv) Copper Compound --

The copper compound is an additive for improving thermal stability in in environments of high temperature and high humidity.

The copper compound is not limited, and may be selected as appropriate depending on the purpose. Examples include: organic copper salts such as copper acetate; and copper halides such as cuprous chloride, cupric chloride, and copper iodide. These may be used singly or in combination of two or more.

The copper concentration with respect to the polyamide in the polyamide multifilament fibers is not limited, and may be selected as appropriate depending on the purpose. The copper concentration is preferably 1 ppm to 500 ppm, and more preferably 30 ppm to 500 ppm.

When the copper concentration is in such a predetermined range, a decrease in mechanical performance can be suppressed effectively even when exposed to an environment of high temperature and high humidity for a long period of time or exposed to an environment containing high levels of ozone for a long period of time.

When the copper concentration is 1 ppm or more, a decrease in the heat-resistant strength retention rate can be prevented. When the copper concentration is 500 ppm or less, a decrease in strength can be prevented.

The copper concentration can be measured by atomic absorption, colorimetry, or the like.

The copper compound is preferably used in combination with a metal halide. The metal halide is not limited, and may be selected as appropriate depending on the purpose. Examples include potassium iodide, potassium bromide, and potassium chloride. These may be used singly or in combination of two or more.

Preferable combinations of the copper compound and the metal halide are not limited, and may be selected as appropriate depending on the purpose. Examples include cupric iodide and potassium iodide, and copper acetate and potassium iodide.

-- (v) Stabilizer --

The stabilizer functions as, for example, a light stabilizer or an ultraviolet absorber.

The stabilizer is not limited, and may be selected as appropriate depending on the purpose. Examples include: organic antioxidants such as hindered phenol-based antioxidants, sulfur-based antioxidants, and phosphorous-based antioxidants; thermal stabilizers; light stabilizers such as hindered amine-based, benzophenone-based, and imidazole-based light stabilizers; and ultraviolet absorbers. These may be used singly or in combination of two or more.

The added amount of the stabilizer with respect to the polyamide in the polyamide multifilament fibers is not limited, and may be selected as appropriate depending on the purpose. The added amount is preferably 1 ppm to 1,000 ppm.

-- (vi) Lactam and/or Aminocarboxylic Acid --

The polyamide multifilament fibers may contain a component derived from a lactam and/or an aminocarboxylic acid to an extent that does not impair the desired effects.

The lactam is not limited, and may be selected as appropriate depending on the purpose. Examples include butyrolactam, pivalolactam, ε-caprolactam, caprylolactam, enantolactam, undecanolactam, and laurolactam (dodecanolactam). These may be used singly or in combination of two or more.

The aminocarboxylic acid is not limited, and may be selected as appropriate depending on the purpose. Examples include: linear or branched saturated aliphatic carboxylic acids having 4 to 14 carbon atoms substituted with an amino group at the ω position, such as 6-aminocaproic acid, 11-aminoundecanoic acid, and 12-aminododecanoic acid; and aromatic carboxylic acids such as para-aminomethylbenzoic acid. These may be used singly or in combination of two or more.

-- Method of Producing Polyamide --

The method of producing the polyamide is not limited, and may be selected as appropriate depending on the purpose. Examples include the following methods (1) to (6):

(1) Method that involves heating an aqueous solution or suspension of a diamine-dicarboxylic acid salt or a mixture thereof and causing polymerization while maintaining the molten state (hereafter also referred to as "hot melt polymerization method");
(2) Method that involves increasing the degree of polymerization of a polyamide obtained by the hot melt polymerization method while maintaining the solid state at a temperature lower than or equal to the melting temperature (hereafter also referred to as "hot melt polymerization-solid phase polymerization method");
(3) Method that involves heating an aqueous solution or suspension of a diamine-dicarboxylic acid salt or a mixture thereof and re-melting the precipitated prepolymer with an extruder such as a kneader to increase the degree of polymerization (hereafter also referred to as "prepolymer-extrusion polymerization method");
(4) Method that involves heating an aqueous solution or suspension of a diamine-dicarboxylic acid salt or a mixture thereof and maintaining the precipitated prepolymer in a solid state at a temperature lower than or equal to the melting temperature of the polyamide to increase the degree of polymerization (hereafter also referred to as "prepolymer-solid phase polymerization method");
(5) Method that involves polymerizing a diamine-dicarboxylic acid salt or a mixture thereof while maintaining the solid state (hereafter also referred to as "solid phase polymerization method"); and
(6) Method that involves polymerizing a dicarboxylic acid halide component equivalent to a dicarboxylic acid and a diamine component (hereafter also referred to as "solution method").

The type of polymerization in the polyamide production method is not limited, and may be selected as appropriate depending on the purpose. The polymerization may be batch type or continuous type.

The polymerization device in the polyamide production method is not limited, and may be selected as appropriate depending on the purpose. Examples include an autoclave reactor, a tumbler reactor, and an extruder-type reactor such as a kneader.

--- Hot Melt Polymerization Method ---

The hot melt polymerization method of batch type is not limited, and may be selected as appropriate depending on the purpose. Examples include the following method.

First, an approximately 40 mass% to 60 mass% solution containing the polyamide components (dicarboxylic acid, diamine, and optionally lactam and/or aminocarboxylic acid) is concentrated to approximately 65 mass% to 90 mass% using water as a solvent in a concentration tank operated at a temperature of 110°C to 180°C and a pressure of approximately 0.035 MPa to 0.6 MPa (gauge pressure), to obtain a concentrated solution. The concentrated solution is then transferred to an autoclave, and heated until the pressure in the vessel reaches approximately 1.5 MPa to 5.0 MPa (gauge pressure). Subsequently, the pressure is held at approximately 1.5 MPa to 5.0 MPa (gauge pressure) while removing water and/or gas components and, when the temperature reaches approximately 250°C to 350°C, the pressure is lowered to atmospheric pressure (gauge pressure: 0 MPa). After decreasing the pressure to atmospheric pressure, water formed as a by-product can be effectively removed by reducing pressure as necessary. Subsequently, the vessel is pressurized with an inert gas such as nitrogen, and the molten polyamide is extruded in the form of a strand. The strand is then cooled and cut to obtain a pellet.

The hot melt polymerization method of continuous type is not limited, and may be selected as appropriate depending on the purpose. Examples include the following method.

First, an approximately 40 mass% to 60 mass% solution containing the polyamide components (dicarboxylic acid, diamine, and optionally lactam and/or aminocarboxylic acid) is preheated to approximately 40°C to 100°C in a vessel of a preliminary device using water as a solvent, and then transferred to a concentration tank/reactor where the solution is concentrated to approximately 70 mass% to 90 mass% at a pressure of approximately 0.1 MPa to 0.5 MPa (gauge pressure) and a temperature of approximately 200°C to 270°C, to obtain a concentrated solution. The concentrated solution is then discharged into a flusher held at a temperature of approximately 200°C to 350°C, and thereafter lowered in pressure to atmospheric pressure (gauge pressure: 0 MPa). After decreasing the pressure to atmospheric pressure, pressure is reduced as necessary. Subsequently, the molten polyamide is extruded into a strand, and the strand is cooled and cut to obtain a pellet.

-- Method of Producing Polyamide Multifilament Fibers --

The polyamide multifilament fibers are obtained by making the polyamide fibrous by a predetermined method. Since the polyamide of the example described above is an alicyclic polyamide, the polyamide is superior in fluidity and spinnability to aromatic polyamides, but inferior to typical aliphatic polyamides such as nylon 66. As a result of producing the polyamide multifilament fibers by the following method, polyamide multifilament fibers excellent in strength, spinning stability, and uniformity can be obtained.

The method of producing the polyamide multifilament fibers is not limited, and may be selected as appropriate depending on the purpose. Melting spinning is preferable, and melting spinning using a screw-type melt extruder is more preferable.

The spinning temperature (melting temperature) of the polyamide is not limited, and may be selected as appropriate depending on the purpose. The spinning temperature (melting temperature) is preferably 300°C or higher and 360°C or lower.

When the spinning temperature (melting temperature) is 300°C or higher, mixing of an undissolved matter due to an insufficient amount of heat can be suppressed. When the spinning temperature (melting temperature) is 360°C or lower, the thermal decomposition of the polymer and the generation of cracked gas can be reduced considerably, so that spinnability can be improved.

After thermal melting, the polyamide is passed through a spinning pack incorporating a metal nonwoven filter having fine holes of approximately 10 $\mu$m to 100 $\mu$m in hole diameter, and discharged through a nozzle with a cap having fine holes referred to as a spinneret.

The number of holes of the spinneret fine-hole nozzle is not limited, and may be selected as appropriate depending on the purpose. In terms of forming a multifilament, the number of holes is preferably 30 or more.

The hole diameter of the spinneret fine-hole nozzle is not limited, and may be selected as appropriate depending on the purpose. In terms of ensuring spinnability, the hole diameter is preferably 0.10 mm to 0.50 mm.

The ratio (L/D) of the length (L) and the diameter (D) of the spinneret fine-hole nozzle is not limited, and may be selected as appropriate depending on the purpose. The ratio (L/D) is preferably 1.0 to 4.0.

Since multifilament spinnerets require a large number of fine holes, the spinneret has a larger surface area than in the case of monofilaments, and temperature unevenness on the spinneret surface tends to occur. In particular, the polyamide multifilament fibers have a high melting temperature (Tm), and the influence of temperature on flow characteristics is significant. Accordingly, the occurrence of temperature unevenness makes it difficult to obtain uniform fibers. Therefore, it is particularly important to reduce temperature unevenness on the spinneret surface and make the temperature of the polymer uniform during discharge. It is preferable to install a spinneret heater to enhance the uniformity of the spinneret surface temperature. Since the exterior of the spinneret surface is subjected to extreme cooling by accompanied flow of yarns, the spinneret heater is preferably attached directly to the spinneret so as to enclose the outside of the spinneret.

By heating the spinneret surface to higher than or equal to the melting temperature (Tm) and lower than or equal to the melting temperature (Tm) + 60°C by the spinneret heater and limiting the temperature difference between the center and the outer periphery of the spinneret surface to 3°C or less, the difference in melt viscosity of the polymer at the time of discharge can be reduced to thus obtain fibers with excellent uniformity.

When the spinneret surface temperature is higher than or equal to the melting temperature (Tm), uniform fibers can be obtained without discharge unevenness caused by an insufficient amount of heat. When the spinneret surface temperature is lower than or equal to the melting temperature (Tm) +60°C, thermal degradation can be reduced.

A heating zone by a heat sleeve or the like is preferably provided for the yarns immediately after discharge. A heat sleeve refers to a heater that surrounds the yarns.

Since the polyamide multifilament fibers have a high melting temperature (Tm), they solidify rapidly immediately after spinning, and thus spinnability decreases. Yarn breakage occurs frequently immediately after leaving the spinneret, making spinning difficult. By installing a heat sleeve to raise the ambient temperature immediately after leaving the spinneret and make the temperature uniform, the solidification speed of the molten polymer and the solidification unevenness among single yarns is reduced, so that spinnability is improved considerably. In addition, since the polyamide multifilament fibers have a high glass transition temperature (Tg), the yarns tend to be oriented due to the effect of spinning draft, causing a decrease in drawability. The installation of a heat sleeve, however, relaxes non-uniform orientation caused by spinning draft, thus improving drawability and strength. The yarns are cooled from the outer single yarns due to the influence of accompanying flow. Hence, the heat sleeve is preferably a cylindrical heater to enclose the outside of the yarns.

The length of the heat sleeve is not limited, and may be selected as appropriate depending on the purpose. In terms of ensuring spinnability immediately after discharge and relaxing orientation, the length of the heat sleeve is preferably 10 mm to 300 mm.

The temperature of the heat sleeve is not limited, and may be selected as appropriate depending on the purpose. The temperature of the heat sleeve is preferably 100°C to 200°C.

The yarns that have passed through the heating zone are rapidly cooled and solidified by being exposed to cold air.

The speed of the cold air is not limited, and may be selected as appropriate depending on the purpose. The speed of the cold air is preferably 0.2 m/min to 2.0 m/min.

When the speed of the cold air is 0.2 m/min or more, insufficient cooling can be prevented. When the speed of the cold air is 2.0 m/min or less, decreases in spinnability and drawability as a result of yarn sway increasing and single yarns coming into contact with and adhering to each other can be prevented.

A finisher is then applied.

The finisher is not limited, and may be selected as appropriate depending on the purpose. Examples include a non-aqueous finisher diluted with mineral oil, and an aqueous dispersion-based emulsion having a finisher concentration of 15 mass% to 35 mass%.

The amount of the finisher applied to the polyamide multifilament fibers is not limited, and may be selected as appropriate depending on the purpose. The amount of the finisher applied is preferably 0.5 mass% to 2.5 mass% and more preferably 0.7 mass% to 2.0 mass%, with respect to the wound polyamide multifilament fibers.

In a drawing step of drawing the polyamide multifilament fibers, a heating bath, a heated steam sprayer, a roller heater, a contact plate heater, a noncontact plate heater, or the like may be used. In terms of productivity, a roller heater is preferable.

In the drawing step, multistage hot drawing of two or more stages including cold drawing and hot drawing is preferably performed. In particular, the cold drawing temperature, the hot drawing temperature, and the ratio between the cold draw ratio and the hot draw ratio are important in order to achieve fiber strength.

Cold drawing is preliminary drawing for appropriately aligning fiber orientation prior to hot drawing.

Since the polyamide forming the polyamide multifilament fibers has a high glass transition temperature (Tg), the cold drawing temperature needs to be a high temperature that is higher than or equal to (glass transition temperature (Tg)-30°C) and lower than or equal to the glass transition temperature (Tg).

When the cold drawing temperature is higher than or equal to (glass transition temperature (Tg)-30°C), the fibers are oriented uniformly and favorable strength is achieved, without drawing unevenness. When the cold drawing temperature is lower than or equal to the glass transition temperature (Tg), crystallization is kept from proceeding excessively. In uniaxial orientation by drawing, parts called neck points where the diameter decreases abruptly and orientation proceeds are present. When the cold drawing temperature is lower than or equal to the glass transition temperature (Tg), such neck points are stabilized, as a result of which uniform fibers in a multifilament can be yielded.

Since the polyamide has a high glass transition temperature (Tg), uneven drawing and excessive thermal crystallization tend to occur due to an insufficient or excessive amount of heat during drawing. The allocation of the cold draw ratio and the hot draw ratio is therefore very important for high level of drawing.

The allocation of the cold draw ratio is not limited, and may be selected as appropriate depending on the purpose. The allocation of the cold draw ratio is preferably 50% or more and 80% or less of the total draw ratio. When the allocation of the cold draw ratio is 50% or more of the total draw ratio, required preliminary drawing is imparted to the fibers, making it possible to obtain uniform fibers without drawing unevenness. In addition, excessive crystallization during hot drawing can be inhibited. When the allocation of the cold draw ratio is 80% or less of the total draw ratio, the required amount of heat for crystallization can be imparted during hot drawing, so that excellent strength can be obtained.

The hot drawing temperature is not limited, and may be selected as appropriate depending on the purpose. The hot drawing temperature is preferably 200°C or higher and 250°C or lower.

When the hot drawing temperature is 200°C or higher, the required amount of heat for crystallization can be imparted. When the hot drawing temperature is 250°C or lower, the fibers can be prevented from thermal degradation.

The total draw ratio is not limited, and may be selected as appropriate depending on the purpose. The total draw ratio is preferably 2.0 to 7.0, and more preferably 3.0 to 6.0.

The drawn fibers are preferably interlaced by spraying a high-pressure fluid onto the yarns using an interlacing device prior to winding.

The interlacing device is not limited, and may be selected as appropriate depending on the purpose. For example, a conventional air interlacing device is used. By interlacing the multifilament, unraveling of single yarn bundles can be prevented to thus avoid problems such as cord breakage until tire cord treatment is performed. In addition, enhancing rupture elongation contributes to improved plunger energy.

The number of interlaces is not limited, and may be selected as appropriate depending on the purpose. The number of interlaces is preferably 1/m to 30/m, more preferably 1/m to 20/m, and particularly preferably 1/m to 15/m. When the number of interlaces is 1/m or more, unraveling of single yarn bundles can be prevented. When the number of interlaces is 20/m or less, damage to the yarns caused by interlacing can be reduced.

The glass transition temperature of the polyamide multifilament fibers is not limited as long as it is in a range of 150°C to 200°C, and may be selected as appropriate depending on the purpose.

If the glass transition temperature is lower than 150°C, the high-temperature elastic modulus and the heat resistance are insufficient. If the glass transition temperature is higher than 200°C, fibers with improved drawability cannot be yielded.

Herein, the "glass transition temperature (Tg)" denotes the temperature when a substance transforms from a vitreous state to a rubbery state, and can be measured with a differential scanning calorimeter (DSC), a dynamic viscoelasticity measurement device, or the like.

<<Rubber>>

The rubber is not limited, and may be selected as appropriate depending on the purpose. Examples include: natural rubber; and synthetic rubbers such as isoprene rubber (IR), butadiene rubber (BR), styrene butadiene rubber (SBR), chloroprene rubber (CR), nitrile rubber (NBR), butyl rubber (IIR), ethylene propylene rubber (EPM), ethylene propylene diene rubber (EPDM), acrylic rubber (ACM), fluorine rubber (FKM), epichlorohydrin rubber (CO, ECO), urethane rubber (U), and silicone rubber (Q). These may be used singly or in combination of two or more.

<<Layer Made of Resorcin-Formalin-Latex Adhesive>>

The layer made of the resorcin-formalin-latex adhesive is not limited as long as it is made of the resorcin-formalin-latex adhesive and is present at the interface between the fiber cord and the rubber, and may be selected as appropriate depending on the purpose.

For example, as described in JPS4811335A, the resorcin-formalin-latex adhesive is an adhesive composition containing: (a) natural rubber and/or synthetic rubber latex; and (b) a cocondensate of phenol-formaldehyde and resorcinol, and is produced by a production method including the steps of: (1) condensing phenol and formaldehyde in the presence of an alkaline catalyst; (2) copolymerizing an aqueous phenol-formaldehyde resin solution and resorcinol; and (3) mixing the resultant phenol-formaldehyde-resorcinol resin solution and latex rubber.

The layer made of the resorcin-formalin-latex adhesive is formed by applying the resorcin-formalin-latex adhesive (RFL adhesive), for example, by dipping the fiber cords in the RFL liquid.

The resorcin-formalin-latex adhesive is typically attached after the fiber cords is obtained as a result of twisting, but may be attached before or during twisting.

The composition of the resorcin-formalin-latex adhesive is not limited, and may be selected as appropriate depending on the purpose. A preferable composition is (i) a composition containing resorcin: 0.1 mass% to 10 mass%, formalin: 0.1 mass% to 10 mass%, and latex: 1 mass% to 28 mass%. A more preferable composition is (ii) a composition containing resorcin: 0.5 mass% to 3 mass%, formalin: 0.5 mass% to 3 mass%, and latex: 10 mass% to 25 mass%.

The thermal contraction stress at 177°C of the fiber cords with the layer formed thereon ("adhesive-attached fiber cords") is not limited as long as it is 0.01 cN/dtex to 0.2 cN/dtex, and may be selected as appropriate depending on the purpose. The thermal contraction stress is preferably 0.01 cN/dtex to 0.1 cN/dtex.

When the thermal contraction stress is 0.2 cN/dtex or less, dimensional stability can be improved.

When the thermal contraction stress is 0.1 cN/dtex or less, dimensional stability can be further improved.

The twist coefficient (K) of the fiber cords with the layer formed thereon ("adhesive-attached fiber cords") is not limited, and may be selected as appropriate depending on the purpose. The twist coefficient (K) is preferably 10,000 to 30,000, more preferably 15,000 to 30,000, and particularly preferably 16,000 to 25,000.

When the twist coefficient (K) is 10,000 or more, the fatigue durability of the cords can be improved, and thermal contraction stress and tanδ can be reduced. When the twist coefficient (K) is 30,000 or less, the elastic modulus of the cords is sufficient.

When the twist coefficient (K) is 15,000 or more, the fatigue durability of the cords can be further improved, and thermal contraction stress and tanδ can be further reduced.

When the twist coefficient (K) is 16,000 or more, the fatigue durability of the cords can be even further improved, and thermal contraction stress and tanδ can be even further reduced. When the twist coefficient (K) is 25,000 or less, in particular the elastic modulus of the cords is sufficient.

The twist coefficient (K) is defined by the following Formula (1):

$$ K = Y \times D^{0.5} \, (T/m \cdot dtex^{0.5}) \qquad \ldots (1) $$

where Y is the twist count (T/m) per 1 m of the fiber cords with the layer formed thereon ("adhesive-attached fiber cord"), and D is the total fineness (dtex) of the fiber cord with the layer formed thereon ("adhesive-attached fiber cords").

The pneumatic tire according to the present disclosure is a pneumatic tire wherein a rubber-fiber composite is used in at least any of a carcass ply and a cap ply, the rubber-fiber composite containing: fiber cords made of polyamide multifilament fibers having a glass transition temperature in a range of 150°C to 200°C; and a rubber, a layer made of a resorcin-formalin-latex adhesive is formed at an interface between the fiber cords and the rubber, and a thermal contraction stress at 177°C of the fiber cords with the layer formed thereon is 0.01 cN/dtex to 0.2 cN/dtex.

The pneumatic tire according to the present disclosure has improved dimensional stability, low loss property, and high-temperature durability.

Preferably, in the pneumatic tire according to the present disclosure, a loss tangent tanδ at 60°C of the rubber-fiber composite is 0.01 to 0.07. With this configuration, the low loss property can be further improved.

Preferably, in the pneumatic tire according to the present disclosure, a storage modulus of the rubber-fiber composite at 60 °C is $2.5 \times 10^8$ Pa to $5.0 \times 10^8$ Pa. With this configuration, flat spots (i.e. as a result of the cords being fixed under a load, the tire remains deformed, and starts to roll in the deformed state, causing decreases in fuel efficiency and ride comfort) can be improved, and the low loss property at the running temperature (room temperature to 100°C) can be further improved.

Preferably, in the pneumatic tire according to the present disclosure, a twist coefficient K of the fiber cords with the layer formed thereon is 10,000 to 30,000. More preferably, the twist coefficient K of the fiber cords with the layer formed thereon is 15,000 to 30,000. With this configuration, while enhancing the dimensional stability, the low loss property at the running temperature can be further improved, and the tire durability can be improved by suppressing heat buildup.

(Pneumatic Tire Production Method)

A method according to the present disclosure for producing a pneumatic tire is a method of producing a pneumatic tire that uses a rubber-fiber composite containing fiber cords and rubber, and includes at least an attachment step and a heat treatment step.

<Method of Producing Fiber Cords>

The fiber cords are obtained by applying a predetermined twist to the polyamide multifilament fibers as described above.

<Method of Producing Rubber-Fiber Composite>

The rubber-fiber composite is obtained by bonding rubber to the fiber cords by a predetermined method.

For example, the method includes dipping in an adhesive pool a large number of fiber cords arranged to form a cord fabric to attach the adhesive to the fiber cords (attachment step), drying the fiber cords taken out of the adhesive pool through a dry path (heat treatment step), and then coating the fiber cords with unvulcanized rubber (calender step).

<Attachment Step>

The attachment step is a step of attaching the resorcin-formalin-latex adhesive to the fiber cord.

The attachment is not limited, and may be selected as appropriate depending on the purpose. Examples include dipping. These may be used singly or in combination of two or more.

The tension of the fiber cord in the attachment step is not limited, and may be selected as appropriate depending on the purpose. The tension is preferably 0.25 cN/dtex to 1.0 cN/dtex.

When the tension is 0.25 cN/dtex or more, the cord is drawn sufficiently, and a sufficient modulus of elongation can be ensured. When the tension is 1.0 cN/dtex or less, cord rupture during dipping is suppressed.

<Heat Treatment Step>

The heat treatment step is a step of heating the fiber cord coated with the resorcin-formalin-latex adhesive.

The heating temperature in the heat treatment step is not limited as long as it is 100°C to 250°C, and may be selected as appropriate depending on the purpose. The heating temperature is preferably 120°C to 240°C.

If the heating temperature is lower than 100°C, the adhesive cannot be dried sufficiently, and its adhesiveness to the rubber degrades. If the heating temperature is higher than 250°C, the possibility of cord rupture during the treatment increases.

When the heating temperature is 120°C or higher, the cord can be dried more sufficiently. When the heating temperature is 240°C or lower, the possibility of cord rupture can be reduced.

The drawing rate of the fiber cord in the heat treatment step is not limited as long as it is 0.1% to 3%, and may be selected as appropriate depending on the purpose. The drawing rate is preferably 0.1% to 2%, and more preferably 0.1% to 1%.

When the drawing rate is 3% or less, the thermal contraction stress of the cord can be reduced to improve tire uniformity.

When the drawing rate is 2% or less, the thermal contraction stress of the cord can be reduced to further improve tire uniformity.

When the drawing rate is 1% or less, the thermal contraction stress of the cord can be further reduced to further improve tire uniformity.

The method according to the present disclosure for producing a pneumatic tire is a method of producing the pneumatic tire according to the present disclosure, the method including: attaching a resorcin-formalin-latex adhesive to a fiber cord made of polyamide multifilament fibers; and heating the fiber cord to which the resorcin-formalin-latex adhesive is attached, at 100°C to 250°C, wherein a drawing rate of the fiber cord in the heat treating is 0.1% to 3%.

The pneumatic tire production method according to the present disclosure employs lower temperature and lower tension than the conventional dipping treatment, so that the thermal contraction stress of the cord can be reduced and a pneumatic tire with improved dimensional stability can be produced efficiently.

EXAMPLES

The present disclosure will be described in more detail below based on Examples, which however shall not be construed as limiting the scope of the present disclosure. Modifications and alterations can be made without departing from the spirit of the present disclosure.

Rubber-fiber composites were produced using fiber cords obtained by dipping the multifilament fibers shown in Table 1 under the dip conditions shown in Table 1, and tires were produced using the rubber-fiber composites as described below.

The fiber cords shown in Table 1 and the rubber-fiber composites were also subjected to the measurements and evaluations described below. The results are shown in Table 1.

<Tire Production Method>

A pneumatic tire of each example and comparative example was produced with the 245/45R19 tire size using the rubber-fiber composite according to the conditions shown in Table 1 in a cap ply and a carcass ply. As the cap ply, one cap and one layer were provided, and the cord count of the rubber-fiber composite having a fiber cord (material: polyamide) was 50 cords/50 mm for each layer. As the carcass ply, one carcass was provided, and the strand count of the rubber-fiber composite having a fiber cord (material: polyamide) was 50/50 mm. Further, two belt layers were provided, and the cord angle was ±30° with respect to the tire circumferential direction and the cord count of steel cord was 40 cords/50 mm.

<Measurement of Twist Coefficient of Fiber Cord>

The twist count Y (count/m) and the total fineness D (dtex) of the fiber cord before dip treatment were measured, and the twist coefficient was calculated according to the following formula. The total fineness D of the fiber cord assumes the same value before and after dipping the fiber cords.

$$\text{Twist coefficient (K)} = \text{twist count (Y)} \times \text{total fineness (D)}^{0.5}.$$

<Measurement of Thermal Contraction Stress of Fiber Cord>

The thermal contraction stress at 177 °C was measured in accordance with JIS L1017.

<Measurement of Storage Modulus E' and Tan$\delta$ of Rubber-Fiber Composite>

For the rubber-fiber composite obtained in each example and comparative example, the values of storage modulus (E') and tan$\delta$ at 60 °C were measured using a dynamic viscoelasticity measurement device at a frequency of 10 Hz, an initial strain rate of 0.5%, and a dynamic strain rate of 1.5%.

<Dimensional Stability (Uniformity) Evaluation>

The low-speed RFV and the high-speed RFV of each of five sample tires were measured under a prescribed internal pressure and a prescribed load in accordance with JASO C 607. The respective average values are shown in the table as an index with the value of the tire of conventional example being 100. A larger index value indicates better uniformity.

<Low Loss Property (Rolling Resistance) Evaluation>

The rolling resistance when rolling each sample tire under a prescribed internal pressure and a prescribed load at a speed of 80 km/h was measured by a coasting method. The measured rolling resistance is shown in the table as an index with the value of the tire of conventional example being 100. A larger index value indicates lower rolling resistance, i.e. better rolling resistance.

<Heating High-Speed Durability (Drum Durability) Evaluation>

Each sample tire was mounted on a rim, and run at a prescribed internal pressure and a prescribed speed, with the speed being increased in stages by 10 km/h per 20 min. The speed when a failure occurred was measured. The measured speed is shown in the table as an index with the value of the tire of conventional example being 100. A larger index value indicates higher endurance limit speed, and better durability.

Table 1

| | Example 1 | Example 2 | Example 3 | Example 4 | Example 5 | Example 6 | Example 7 | Comparative Example 1 |
|---|---|---|---|---|---|---|---|---|
| Material of polyamide multifilament fibers | High TgPA[*1] | High TgPA[*1] | High TgPA[*1] | High TgPA[*1] | High TgPA[*1] | High TgPA[*1] | High TgPA[*1] | Ny66[*2] |
| Cord size | 940dtex/2 | 940dtex/2 | 940dtex/2 | 940dtex/2 | 940dtex/2 | 940dtex/2 | 940dtex/2 | 940dtex/2 |
| Twist coefficient (K) | 16910 | 20379 | 27024 | 16910 | 20379 | 27024 | 11273 | 11273 |
| Dip conditions | Conditions 1[*3] | Conditions 1[*3] | Conditions 1[*3] | Conditions 2[*4] | Conditions 2[*4] | Conditions 2[*4] | Conditions 1[*3] | Conditions 1[*3] |
| Thermal contraction stress (cN/dtex) | 0.09 | 0.09 | 0.08 | 0.07 | 0.06 | 0.06 | 0.12 | 0.15 |
| 60°C treat tan$\delta$ | 0.050 | 0.049 | 0.053 | 0.049 | 0.048 | 0.051 | 0.051 | 0.084 |
| 60°C storage modulus E' | $3.19 \times 10^8$ | $3.17 \times 10^8$ | $3.10 \times 10^8$ | $3.06 \times 10^8$ | $3.04 \times 10^8$ | $2.98 \times 10^8$ | $3.92 \times 10^8$ | $2.47 \times 10^8$ |
| Dimensional stability (uniformity) | 106 | 106 | 107 | 108 | 110 | 109 | 103 | 100 |
| Low loss property (rolling resistance test: RRC) | 106 | 107 | 105 | 107 | 108 | 106 | 106 | 100 |
| Heating durability (drum durability test) | 117 | 118 | 110 | 118 | 120 | 110 | 120 | 100 |

*1: High TgPA produced by Asahi Kasei Fiber Co., Ltd., glass transition temperature: 160 °C.

*2: Ny66 produced by Asahi Kasei Fiber Co., Ltd., product name: T-5, glass transition temperature: 50 °C.

*3: Conditions 1: dip temperature: 230 °C, dip tension: 0.34 cN/dtex, drawing: 0.95 %.

*4: Conditions 2: dip temperature: 200 °C, dip tension: 0.09 cN/dtex, drawing: 0.1 %.

REFERENCE SIGNS LIST

| | |
|---|---|
| 1 | Carcass ply |
| 2a, 2b | Belt layer |
| 3, 4 | Cap ply |
| 11 | Bead |
| 12 | Sidewall |
| 13 | Tread |

**Claims**

1. A pneumatic tire,
   wherein a rubber-fiber composite is used in at least any of a carcass ply and a cap ply, the rubber-fiber composite containing: a fiber cord made of polyamide multifilament fibers having a glass transition temperature in a range of 150°C to 200°C; and a rubber,
   a layer made of a resorcin-formalin-latex adhesive is formed at an interface between the fiber cord and the rubber, and
   a thermal contraction stress at 177°C of the fiber cord with the layer formed thereon is 0.01 cN/dtex to 0.2 cN/dtex.

2. The pneumatic tire according to claim 1,
   wherein a loss tangent tan$\delta$ at 60°C of the rubber-fiber composite is 0.01 to 0.07.

3. The pneumatic tire according to claim 1 or 2,
   wherein a storage modulus at 60°C of the rubber-fiber composite is $2.5 \times 10^8$ Pa to $5.0 \times 10^8$ Pa.

4. The pneumatic tire according to any one of claims 1 to 3,
   wherein a twist coefficient K of the fiber cord with the layer formed thereon is 10,000 to 30,000, the twist coefficient K being defined by the following Formula (1):

$$K = Y \times D^{0.5} \ \text{T/m·dtex}^{0.5} \ ... \ (1)$$

   where Y is a twist count, expressed in T/m, per 1 m of the fiber cord with the layer formed thereon, and D is a total fineness, expressed in dtex, of the fiber cord with the layer formed thereon.

5. The pneumatic tire according to claim 4,
   wherein the twist coefficient K of the fiber cord with the layer formed thereon is 15,000 to 30,000.

6. A method of producing the pneumatic tire according to any one of claims 1 to 5, comprising:

   attaching a resorcin-formalin-latex adhesive to a fiber cord made of polyamide multifilament fibers; and
   heating the fiber cord to which the resorcin-formalin-latex adhesive is attached, at 100°C to 250°C,
   wherein a drawing rate of the fiber cord in the heating is 0.1 % to 3 %.

# FIG. 1

## INTERNATIONAL SEARCH REPORT

| | International application No. |
|---|---|
| | PCT/JP2017/029774 |

A. CLASSIFICATION OF SUBJECT MATTER
*D02G3/48*(2006.01)i, *B60C9/00*(2006.01)i, *B60C9/08*(2006.01)i, *B60C9/22* (2006.01)i, *D02G3/26*(2006.01)i

According to International Patent Classification (IPC) or to both national classification and IPC

B. FIELDS SEARCHED

Minimum documentation searched (classification system followed by classification symbols)
D02G3/48, B60C9/00, B60C9/08, B60C9/22, D02G3/26

Documentation searched other than minimum documentation to the extent that such documents are included in the fields searched
Jitsuyo Shinan Koho          1922–1996     Jitsuyo Shinan Toroku Koho    1996–2017
Kokai Jitsuyo Shinan Koho    1971–2017     Toroku Jitsuyo Shinan Koho    1994–2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2016-68822 A  (Toyo Tire and Rubber Co., Ltd.), 09 May 2016 (09.05.2016), claim 1; paragraphs [0022], [0023], [0030] (Family: none) | 1-6 |
| A | JP 2016-60341 A  (Toyo Tire and Rubber Co., Ltd.), 25 April 2016 (25.04.2016), claim 1; paragraphs [0021], [0022], [0025] (Family: none) | 1-6 |
| A | JP 2016-41571 A  (Toyo Tire and Rubber Co., Ltd.), 31 March 2016 (31.03.2016), claims 1, 5; paragraphs [0020], [0021] (Family: none) | 1-6 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 October 2017 (16.10.17) | 31 October 2017 (31.10.17) |

| Name and mailing address of the ISA/ | Authorized officer |
|---|---|
| Japan Patent Office 3-4-3,Kasumigaseki,Chiyoda-ku, Tokyo 100-8915,Japan | Telephone No. |

Form PCT/ISA/210 (second sheet) (January 2015)

**INTERNATIONAL SEARCH REPORT**

| International application No. |
| --- |
| PCT/JP2017/029774 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2012-171553 A  (Bridgestone Corp.), 10 September 2012 (10.09.2012), claims 1, 2; paragraphs [0018], [0023] (Family: none) | 1-6 |
| A | US 2008/0099118 A1  (Bridgestone Corp.), 01 May 2008 (01.05.2008), claim 1 & EP 1867495 A1          & CN 101111396 A | 1-6 |
| P,A | JP 2016-203777 A  (Toyo Tire and Rubber Co., Ltd.), 08 December 2016 (08.12.2016), claims 1 to 3; paragraphs [0023], [0024], [0026], [0033], [0034] (Family: none) | 1-6 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006078013 A1